# EUROPÄISCHE PATENTSCHRIFT

(11) **EP 3 233 427 B1**
(45) Veröffentlichungstag und Bekanntmachung des Hinweises auf die Patenterteilung: **16.09.2020**
(21) Anmeldenummer: 15813688.7
(22) Anmeldetag: 07.12.2015
(51) Int. Cl.: B29C 67/00

(54) **VERFAHREN UND VORRICHTUNG ZUR HERSTELLUNG VON FORMKÖRPERN**
METHOD AND DEVICE FOR THE MANUFACTURE OF MOLDED ARTICLES
MÉTHODE ET DISPOSITIF POUR LA FABRICATION DE CORPS FAÇONNÉS

(30) Priorität: 19.12.2014 WO PCT/CH2014/000177
(43) Veröffentlichungstag der Anmeldung: 25.10.2017
(73) Patentinhaber: Hirschberg Engineering AG, 8404 Winterthur (CH)
(72) Erfinder: HIRSCHBERG, Sebastian, 8408 Winterthur (CH)
(74) Vertreter: Keller & Partner Patentanwälte AG
(86) Internationale Anmeldenummer: PCT/CH2015/000179
(87) Internationale Veröffentlichungsnummer: WO 2016/095060

(56) Entgegenhaltungen:
- DE-A1- 4 332 982

## Beschreibung

### Technisches Gebiet

Die vorliegende Erfindung betrifft Verfahren zur Herstellung von Formkörpern aus zwei oder mehr Formkörperschichten. Sie betrifft weiter Vorrichtungen zur Durchführung der erfindungsgemässen Verfahren sowie die Verwendung besagter Formkörper, alles gemäss den Oberbegriffen der unabhängigen Ansprüche.

### Stand der Technik

Beim 3-D-Druck handelt es sich um Fertigungsverfahren, um dreidimensionale Werkstücke schrittweise und automatisch aufzubauen. Üblicherweise wird beim 3-D-Druck aus einem Ausgangsmaterial eine vordefinierte Form erzeugt. Typische im 3-D-Druck verwendete Materialien sind Kunststoffe, Harze, Keramiken und Metalle. Insbesondere beim gegenwärtig sehr aktuellen Rapid-Prototyping sollen möglichst ohne manuellen Aufwand eine Vielzahl an möglichen Formen und Strukturen hergestellt werden. Dabei steht die Vielseitigkeit der druckenden Maschine im Vordergrund, um aus der formbaren Masse als Ausgangsmaterial eine vom Anwender computergestützt definierte Form strukturell und schrittweise zu replizieren. Diese Vorrichtungen und Verfahren richten sich, wie der Name schon sagt, auf die Herstellung von "Prototypen", also weitgehend Einzelstücke. Entsprechend sind die meisten Vorrichtungen und Verfahren für eine industrielle Massenfertigung ungeeignet, da sie keine grossen Umsatzzahlen aufweisen und material- und energieaufwendig sind.

Es besteht somit ein Bedürfnis, Verfahren und Vorrichtungen bereitzustellen, um einen schichtweisen Aufbau dreidimensionaler Strukturen effizient und industriell skalierbar zu ermöglichen.

Neben dem für das Rapid Prototyping interessanten Anwendungsgebiet der Herstellung von Prototypen, Unikaten und Visualisierungen kann der 3-D-Druck verwendet werden, um industriell und technisch einsetzbare Formteile zu erstellen. In der WO 2014/043823 A1 (Hirschberg Engineering) sind solche Formkörper gezeigt. Diese Formkörper weisen verzweigte Stege und Schichten auf, die besonders für Anwendungen bei strömungsgetriebenen Prozessen geeignet sind. Unter anderem können die gezeigten Formkörper als statische Mischer oder Wärmetauscher oder zur Emulgierung oder Schäumung von Substanzen oder als katalytische Oberflächen bei chemischen Reaktionen verwendet werden. Hergestellt werden die Formkörper, indem eine plastisch verformbare Masse durch eine Schablone schichtweise aufgetragen wird. Die Schichten können schrittweise oder am Ende, nachdem der fertige Formkörper besteht, gehärtet werden. Dabei wird jede Schicht durch eine passende zugehörige Schablone auf die vorangegangene Schicht aufgetragen. Gehärtet wird mittels Trocknung, UV-Härtung oder anderweitig induzierter Härtung. Dabei bestimmen die Ausnehmungen der als Maske oder Sieb verwendeten Schablone die Form der jeweiligen Schichten.

Die DE 43 32 982 A1 (EOS GmbH Optical Systems) offenbart eine Vorrichtung und ein Verfahren und eine Vorrichtung zur Herstellung eines dreidimensionalen Objekts, bei dem das Objekt schichtweise durch Aufbringen einer Schicht eines verfestigbaren Materials und anschliessendes Verfestigen dieses Materials an den dem Objekt entsprechenden Stellen durch Einwirkung elektromagnetischer Strahlung hergestellt wird. Dabei wird zunächst eine Materialschicht auf einen Zwischenträger aufgebracht und danach vom Zwischenträger auf das Objekt übertragen und verfestigt.

### Darstellung der Erfindung

Ausgehend von diesem bekannten Stand der Technik und dem oben genannten Bedürfnis ist es eine Aufgabe der vorliegenden Erfindung, ein Verfahren zum schichtweisen Aufbau von Formkörpern mit zwei oder mehr Formkörperschichten bereitzustellen, welches besonders geeignet ist, um industriell automatisiert zu werden und insgesamt effizienter ist. Insbesondere soll ein Verfahren bereitgestellt werden, welches für die Massenproduktion geeignet ist.

Die Lösung mindestens einer der genannten Aufgaben ist durch den kennzeichnenden Teil der unabhängigen Ansprüche definiert.

Ein Aspekt der vorliegenden Erfindung betrifft ein Verfahren zu Herstellung von Formkörpern aus zwei oder mehr Formkörperschichten. Das erfindungsgemässe Verfahren umfasst eine Reihe von Schritten. In einem ersten Schritt wird ein Schichtträger zur Aufnahme von zwei oder mehr Formkörperschichten bereitgestellt. Eine Formkörperschicht wird auf eine Druckplatte aufgetragen, wobei die Formkörperschicht durch ein formgebendes Werkzeug auf diese besagte Druckplatte aufgetragen wird. Grundsätzlich sei festgehalten, dass im Kontext der vorliegenden Erfindung Verfahrensschritte, welche nicht logisch zwingend aufeinanderfolgen müssen, oder bei denen eine Abfolge nicht explizit erwähnt ist, nicht ausschliesslich in der in der vorliegenden Aufzählung erfolgenden Reihenfolge ablaufen müssen. In diesem konkreten Fall kann das Bereitstellen des Schichtträgers zum Beispiel zeitgleich mit dem Auftragen der Formkörperschicht auf die Druckplatte durch das formgebende Werkzeug stattfinden. Das erfindungsgemässe Verfahren umfasst weiter den Schritt, dass die Druckplatte und der Schichtträger relativ zueinander positioniert werden. Zu diesem Zeitpunkt kann auf dem Schichtträger bereits eine erste oder eine Mehrzahl älterer Formkörperschichten bestehen, die in vorgängigen Durchläufen des erfindungsgemässen Verfahrens auf diese übertragen wurden.

Im Sinne der vorliegenden Erfindung kann unter dem relativen Positionieren der Druckplatte verstanden werden, dass entweder die Druckplatte oder der Schichtträger oder beide eine Bewegung vollführen, bei der die Formkörperschicht auf der Druckplatte mit entweder dem Schichtträger oder einer allfällig darauf bereits vorhandenen älteren Formkörperschicht kontaktiert wird. Dabei werden bevorzugt Druckplatte und Schichtträger relativ zueinander so positioniert, dass die Formkörperschicht beim Übertrag von der Druckplatte auf den Schichtträger exakt wie gewünscht auf dem Schichtträger ausgerichtet ist.

In einem weiteren Schritt wird die Formkörperschicht ausgehärtet. Eine ausgehärtete Formkörperschicht wird im Kontext des erfindungsgemässen Verfahrens eine ältere Formkörperschicht oder geht mit einer bereits bestehenden älteren Formkörperschicht einen Verbund ein. Dieser Aushärtungsschritt kann insbesondere zu dem Zeitpunkt stattfinden, in dem die Druckplatte und der Schichtträger relativ zueinander positioniert sind. In diesem Zustand können Schichtträger und Druckplatte mechanische Stützen für die noch nicht ausgehärtete Formkörperschicht bilden.

Entsprechend kann die Formkörperschicht des aktuellen Verfahrensschrittes auf eine oder mehrere ältere Formkörperschicht(en) übertragen werden, wobei entsprechend die Druckplatte oder die älter(en) Formkörperschicht(en) relativ zueinander positioniert sind. Ein Übertragen der Formkörperschicht beinhaltet ein Ablösen von der Druckplatte. Für spätere Durchläufe wird die gehärtete, übertragene Formkörperschicht somit zu einer älteren Formkörperschicht. Im Sinne der vorliegenden Erfindung ist eine ältere Formkörperschicht im Verhältnis zur aktuellen Formkörperschicht definiert. Das heisst, jede einer Formkörperschicht vorangegangene Formkörperschicht ist bezüglich dieser eine ältere Formkörperschicht. Alternativ können die Formkörperschichten bezüglich ihrer Anzahl durchnummeriert werden. So ist die erste auf einem Schichtträger übertragene Formkörperschicht die erste Formkörperschicht. Die zweite Formkörperschicht entsprechend die zweite, usw. Selbstredend wäre die erste Formkörperschicht bezüglich der zweiten die ältere Formkörperschicht. Die Anzahl durchlaufener Wiederholungen ist abhängig von der gewünschten Endform des resultierenden Formkörpers und kann vom Fachmann individuell gewählt werden. Entsprechend umfasst der letzte Schritt des erfindungsgemässen Verfahrens das eventuelle Bereitstellen der Druckplatte zur Aufnahme weiterer Formkörperschichten und das anschliessende Wiederholen der oben genannten Verfahrensschritte. In einer besonderen Ausführungsform ist eine ältere Formkörperschicht zugleich eine gehärtete Formkörperschicht.

Im Sinne der vorliegenden Erfindung ist der aus dem erfindungsgemässen Verfahren resultierende Formkörper insofern aus zwei oder mehr Formkörperschichten aufgebaut, als dass diese ein direktes Resultat aus dem Verfahren ist. Grundsätzlich sind die resultierenden Formkörper aber nicht auf die nach Abschluss des Prozesses bedingte Erkennbarkeit der einzelnen Formkörperschichten beschränkt. Auch sind die resultierenden Formkörper nicht auf rechtwinklige, flache Schichten oder Schichten homogener Dicke beschränkt.

In einer besonderen Ausführungsform des erfindungsgemässen Verfahrens ist das formgebende Werkzeug eine Schablone. Die Schablone kann so ausgestaltet sein, dass sie als ebene Fläche über der Druckplatte positionierbar ist. Ausnehmungen in der Schablone definieren die Form der durch die entsprechenden Schablonen aufgetragenen Formkörperschicht. Eine Schablone oder ein formgebendes Werkzeug kann eine Vielzahl identischer oder unterschiedlicher Formen für Formkörperschichten definieren.

Mit dem erfindungsgemässen Verfahren können Formkörperschichten rasch automatisiert aufgebaut und aufgetragen werden. Dadurch eignet sich das erfindungsgemässe Verfahren besonders gut für die Massenproduktion.

In einer besonderen Ausführungsform ist das formgebende Werkzeug ein Sieb, insbesondere ein Sieb für den technischen Siebdruck.

Ein weiterer Vorteil des erfindungsgemässen Verfahrens ist, dass es sowohl für Sieb- als auch für Schablonendruck geeignet ist. Dies wird dadurch besonders vereinfacht, dass der Schritt des Auftragens der Formkörperschicht auf den Schichtträger indirekt erfolgt, das heisst, dass zunächst von einer Druckerplatte die Formkörperschicht mit bereits definierter Form auf den Schichtträger übertragen wird. Dank dieses indirekten Druckverfahrens kann im vorliegenden Verfahren auch eine Kombination aus Sieb- und Schablonendruck für entsprechende Schichten angewandt werden.

In einer besonderen Ausführungsform ist die Druckplatte eben ausgestaltet. Dies hat den Vorteil, dass besonders für Schablonendruck eine perfekt ebene Unterlage besonders gute Druckresultate bei den einzelnen Formkörperschichten liefert. Aber auch beim Siebdruck ist eine ebene Druckplatte von Vorteil für das Druckresultat der einzelnen Formkörperschichten.

Ohne an diese Theorie gebunden zu sein, scheint einer der erfindungsgemässen Vorteile darin zu liegen, dass die Druckplatte den Formkörperschichten zusätzlichen Halt gibt, bis sie ausgehärtet sind. Dadurch ist es möglich, komplexere Muster zu drucken, die nicht vollständig auf älteren Formkörperschichten aufliegen müssen.

In einer besonderen Ausführungsform ist die Druckplatte so ausgestaltet, dass die Formkörperschicht darauf schlecht haftet. Die Formkörperschicht wird von der Druckplatte auf den Schichtträger oder die ältere Formkörperschicht übertragen. Um die Übertragung zu erleichtern ist es von Vorteil, wenn die Formkörperschicht nicht übermässig an der Druckplatte haftet. Die Haftung einer ausgehärteten Paste auf einer Oberfläche hängt von der Oberflächenform sowie von der Paarung Oberfläche - Paste ab. Für geringe Haftung muss eine chemische Verbindung der Paste mit der Oberfläche ausgeschlossen werden, die Struktur der Oberfläche glatt sein und die Oberfläche eine möglichst niedrige Oberflächenenergie aufweisen. Oberflächenenergien kleiner als 40 mN/m, insbesondere Oberflächenenergien kleiner als 30 mN/m und insbesondere Oberflächenenergien kleiner als 20 mN/m gelten im Sinne der vorliegenden Anmeldung als niedrig.

In einer besonderen Ausführungsform ist das Material der Druckplatte so ausgestaltet, dass die Formkörperschicht darauf schlecht haftet. Zusätzlich oder in einer alternativen Ausführungsform kann die Oberfläche der Druckplatte dergestalt bearbeitet sein, dass sich die Formkörperschicht im entsprechenden Übertragungsschritt leicht ablöst. Grundsätzlich ist dies durch eine Oberflächenbehandlung der Druckplatte möglich. Diese Oberflächenbehandlung kann permanent sein, das heisst, die Druckplatte ist mit einer entsprechenden Oberflächenbehandlung versehen, die bereits im Fertigungsprozess der Druckplatte stattgefunden hat. Alternativ oder zusätzlich kann die Druckplatte mit einem temporären System der Oberflächenbehandlung ausgestattet sein. Es ist zum Beispiel möglich, die Druckplatte mit einem Wachs oder Harz oder einem Pulver zu beschichten, welches sich im Verlauf der Anwendungen der Druckplatte verbraucht und wiederholt aufgetragen werden muss. Entsprechend können in einer Vorrichtung zur Durchführung des erfindungsgemässen Verfahrens Strukturen vorgesehen sein, welche diese Beschichtung jeweils in periodischen Abständen oder vor jeder Anwendung der Druckplatte vornehmen.

In einer besonderen Ausführungsform ist das Haftverhalten der Druckplatte mittels Einbrennsilikonisierung gesenkt. In einer alternativen besonderen Ausführungsform ist die Druckplatte mit einer Beschichtung, welche Fluorpolymere enthält, versehen.

In einer besonderen Ausführungsform ist das Haftverhalten der Druckplatte mittels einer Schicht Polydimethylsiloxan oder anderer Polysilane gesenkt.

In einer besonderen Ausführungsform wird vor jeder Anwendung eine dünne Beschichtung auf die Druckplatte aufgebracht. In einer bevorzugten Ausführungsform werden fett- oder wachshaltige Schichten vor jeder Anwendung auf die Druckplatte aufgebracht.

Alternativ können auch Trockenschmiermittel oder Trockengleitschichten, wie sie aus der Trockenschmierung von Gleitlagern bekannt sind, verwendet werden, um die Hafteigenschaften der Druckplatte zu senken. Bevorzugt sind transparente Trockengleitschichten basierend auf synthetischen Wachsen.

In einer besonderen Ausführungsform werden thermisch behandelte Silikatschichten verwendet. Wasserlösliche Natronsilikate, Lithiumsilikate oder Kaliumsilikate können in flüssiger Form aufgetragen werden und erstarren beim Trocknen zu glasartigen, amorphen Schichten. Besonders wenn Pasten mit Acrylbasierten Photopolymeren zur Bildung der Formkörperschichten verwendet werden, hat es sich überraschend gezeigt, dass eine Beschichtung der Druckplatte mit einer dünnen Schicht Natronsilikat, welche vor dem Einsatz in einem Ofen für eine halbe Stunde auf rund 100°C erhitzt wird, besonders gute Ergebnisse liefert.

In einer besonderen Ausführungsform wird die ältere Formkörperschicht auf dem Schichtträger oder der Schichtträger selbst in einem Verfahrensschritt mit einem Haftvermittler versehen, bevor eine nächste weitere Formkörperschicht darauf übertragen wird. Bevorzugt umfasst dieser Schritt ein Eintunken, Besprühen oder Benetzen mittels eines Stempelkissens des Schichtträgers mit besagtem Haftvermittler.

Ein Haftvermittler kann dazu führen, dass die Verbindung zwischen der aktuellen Formkörperschicht und der älteren Formkörperschicht verbessert wird. Dazu wird die Stirnfläche der älteren Formkörperschicht, welche bereits ausgehärtet ist, zum Beispiel mit einem dünnflüssigen Haftvermittler benetzt. Je nach verwendetem Material können verschiedene Haftvermittler eingesetzt werden. Insbesondere bei Pasten die auf Photopolymeren basieren können zum Beispiel Monomere ohne Photoinitiator verwendet werden, die nur im Kontakt mit den Pasten vernetzen, die den entsprechenden Photoinitiator enthalten. Wo die neue Formkörperschicht die ältere schon ausgehärtete Formkörperschicht nicht berührt, bleibt dieser Haftvermittler auch unter der Wirkung der UV Strahlung flüssig. Bei Acryl-basierten Photopolymeren und deren dünnflüssigen Monomeren können alternativ auch dem als Haftvermittler eingesetzten Monomer Photoinitiatoren beigemischt werden. Die dünnen Monomerschichten härten in diesem Fall nicht aus, wenn sie nicht durch die Paste der neuen Formkörperschicht überdeckt werden, da bei den sehr dünnen Haftvermittlerschichten die Polymerisation durch den Sauerstoff in der Luft inhibiert wird. In einer besonderen Ausführungsform des erfindungsgemässen Verfahrens wird eine plastisch verformbare Masse durch die Ausnehmungen des formgebenden Werkzeugs auf die Druckplatte zur Bildung der Formkörperschicht aufgetragen. Geeignete plastisch verformbare Massen können vom Fachmann je nach gewünschtem Anwendungsgebiet, dem anvisierten Härtungsprozess und der Materialverfügbarkeit gewählt werden.

Bevorzugt weisen die plastisch verformbaren Massen für den Druck durch die formgebenden Werkzeuge geeignete rheologische Eigenschaften auf. Besonders bevorzugt sind formbare Massen, die thixotrope Eigenschaften aufweisen. Solche plastisch verformbaren Massen fliessen unter Scherbeanspruchung gut, sind aber zusätzlich auf der Druckplatte formstabil. Besonders geeignet sind Suspensionen. Suspensionen können als Hauptbestandteil feinkörniges Pulver aufweisen, welches entsprechend des Materials des gewünschten Formkörpers gewählt wird. Geeignet sind zum Beispiel Metalle, Metalllegierungen, Edelstahl oder Edelmetalle sowie Keramiken und/oder Glaskeramiken. Zur Bildung eines plastisch verformbaren Werkstoffs werden insbesondere organische Binder zugegeben. Materialien, die zum Beispiel als organische Binder verwendet werden können, sind u. a. CMC (Carboxymethylcellulose), Polyolefin sowie verschiedene Formen natürlicher Stärke (Maismehl, Weizenmehl etc.). Alternativ können als organische Binder verschiedene Typen von Photopolymeren eingesetzt werden. Als Photopolymere werden Monomere und Oligomere sowie Mischungen davon bezeichnet, die durch die Wirkung eines in geringen Mengen von typischerweise weniger als 5% beigemischten Photoinitiators durch Lichtstrahlung, typischerweise im ultravioletten Bereich, zu polymerisieren beginnen. Es existiert eine grosse Zahl von unterschiedlichen Photopolymeren. Bevorzugt werden Acrylmonomere, wie unter anderem zum Beispiel Hexan-1,6-Diol-Diacrylat, Trimethylpropantriacrylat, Poly (Ethylen Glycol) Diacrylat, die mit geringen Mengen Photoinitiatoren wie unter anderem zum Beispiel 0.5% 2,2-Dimethoxy-2-Phenylacetophenone versetzt wurden, als Bindermaterial in Frage. Je nach Anforderungen können diese Monomere mit unterschiedlichen Oligomeren von Polyacrylaten gemischt werden.

Ist die plastisch verformbare Masse für einen Sinterschritt vorgesehen, was bei zum Beispiel Keramiken, Metallen oder Glas der Fall ist, enthält sie einen volumenmässig hohen Anteil des zu sinternden Pulvers, insbesondere von >35 Volumenprozent, weiter insbesondere > 50 Volumenprozent.

In einer besonderen Ausführungsform weisen die plastisch verformbaren Massen zusätzliche Additive auf, welche verwendet werden können, um die rheologischen Eigenschaften der Masse zu ändern, wie zum Beispiel Dispersionshilfmittel. Solche Zusätze sind dem Fachmann bekannt und können von ihm situativ an die erforderlichen Bedingungen angepasst ausgewählt werden (Journal of Engineering, Volume 2013 (2013), Article ID 930832).

In einer alternativen besonderen Ausführungsform umfasst die plastisch verformbare Masse reine Kunststoffteile. Diese können entsprechende Monomere und/oder Oligomere aufweisen, die später polymerisiert werden. Solche plastisch verformbaren Massen können auch zusätzliche Additive zur Einstellung der rheologischen Eigenschaften, sowie Lösungsmittel, Pigmente, Katalysatoren oder Biozide enthalten.

In einer besonderen Ausführungsform kann die plastisch verformbare Masse Pulver eines Grundwerkstoffs als Suspension enthalten, ausgewählt aus der Gruppe bestehend aus: Metalle, Stahllegierungen, Hartmetalle, Buntmetalle, Edelmetalle, Keramiken, MetallKeramik-Verbundwerkstoffe, Glas, Kunststoffe und/oder Kunststoff-Verbundwerkstoffe mit Faserverstärkung oder Metall- oder Keramikpartikeln. Auch Gemische aus diesen Materialien sind denkbar.

In einer besonderen Ausführungsform wird eine Formkörperschicht aus mehreren Teil-Formkörperschichten aufgebaut, die nacheinander einzeln auf die Druckplatte gedruckt, in die Formkörperschicht eingepasst und ausgehärtet werden. Die einzelnen Teil-Formkörperschichten können dabei aus derselben oder aus unterschiedlichen Pasten bestehen, wodurch sich Formkörperschichten erstellen lassen, die aus mehreren unterschiedlichen Materialien aufgebaut sind
In einer besonderen Ausführungsform wird eine Mehrzahl an plastisch verformbaren Massen mit verschiedenen Eigenschaften durch verschiedene Ausnehmungen des formgebenden Werkzeugs auf die Druckplatte zur Bildung der Formkörperschicht aufgetragen. Dadurch kann eine Formkörperschicht gebildet werden, welche aus unterschiedlichen Materialien besteht.

Diese beiden Ausführungsformen können zum Beispiel im gewünschten Endprodukt, also Formkörper, so vorgesehen sein. Eine weitere mögliche Anwendung wäre es, ein oder mehrere zusätzliche Materialien zu verwenden, welche später modifiziert werden. Diese können als Füll- oder Stützstrukturen verwendet werden, welche dem im Aufbau befindlichen Formkörper während des Aufbauprozesses eine bessere Stabilität verleihen. Später können diese Füll- oder Stützstrukturen mittels mechanischer, chemischer oder thermischer Verfahren wieder aus dem Formkörper entfernt werden.

Wird als plastisch verformbare Masse ein Sintermaterial aus der oben geschilderten Gruppe verwendet, wie zum Beispiel Metalle, Metalllegierungen, Keramik, Glas oder Verbunde dieser Materialien, so umfasst das erfindungsgemässe Verfahren eine thermische Behandlung des Formkörpers zur Sinterung, die nach dem Abschluss des formgebenden Prozesses des Formkörpers durchgeführt wird.

In einer bevorzugten Ausführungsform wird der Formkörper bei Temperaturen von zwischen 500 und 2500 °C, vorzugsweise zwischen 600 und 1700 °C gesintert.

In einer besonderen Ausführungsform ist der Schichtträger so ausgestaltet, dass die Formkörperschichten an ihm gut haften. Das kann durch die Wahl des Materials des Schichtträgers oder durch eine Beschichtung des Schichtträgers gesteuert werden. Falls der Schichtträger nicht in einer auf den Aufbau des Formkörpers folgenden thermischen Behandlung mit verwendet werden soll, ist zum Beispiel eine Aluminiumlegierung ein geeigneter Werkstoff für Schichtträger für Pasten mit Acryl-basierten Photopolymeren.

In einer besonderen Ausführungsform, welche einen Sinterschritt umfasst, ist der Schichtträger so ausgestaltet, dass er als Träger für den Sinterprozess geeignet ist. Dazu muss der Schichtträger so ausgestaltet sein, dass er die Temperaturen, welche im Sinterschritt erzeugt werden, unbeschadet übersteht. Bevorzugt ist der Schichtträger aus einem keramischen Material, wie zum Beispiel Aluminiumoxid, Korund, Siliziumcarbid oder Saphir. Alternativ kann auch Graphit oder Kohlefaser als Material für den Schichtträger verwendet werden. Während des Druckverfahrens muss die Formschicht auf dem Schichtträger gut haften. Falls der Formkörper am Ende des Herstellverfahrens gesintert werden soll und der Schichtträger als Sinterunterlage bei dem Sinterverfahren mit verwendet werden soll, muss der erzeugte Formkörper vom Schichtkörper gelöst werden, damit sich der Formkörper relativ zum Schichtträger unbehindert ausdehnen resp. insbesondere schrumpfen kann. Bevorzugt ist zu diesem Zweck der Schichtträger mit einer Beschichtung versehen. Besonders bevorzugt ist der Schichtträger mit einer Polivinylbutyral (PVB) Schicht versehen. Zu Beginn des Sinterprozesses mit Temperaturen zwischen 500 bis 600 °C löst sich diese Beschichtung im Wesentlichen rückstandslos auf und ermöglicht so im darauf folgenden Verlauf des Sinterprozesses ein ungehindertes Schrumpfen des Formkörpers.

In einer besonderen Ausführungsform weist das erfindungsgemässe Verfahren einen Polymerisationsschritt auf. Bevorzugt handelt es sich um einen Polymerisationsschritt ausgewählt aus der Gruppe bestehend aus: photoinduzierter, thermoinduzierter oder chemoinduzierter Polymerisation.

Besonders bevorzugt weist das erfindungsgemässe Verfahren einen Photopolymerisationsschritt auf. Bei diesem Schritt wird eine Formkörperschicht auf der Druckplatte und in Kontakt mit dem Schichtträger oder den älteren, schon ausgehärteten Formträgerschichten ausgehärtet. Zu diesem Zweck wird die entsprechend ausgewählte plastisch verformbare Masse mit Licht der entsprechenden Wellenlänge beaufschlagt, um die Polymerisationsreaktion zu starten. Dazu wird der plastisch verformbaren Masse ein entsprechender Zusatz an Photopolymeren zugegeben. Diese Beaufschlagung der plastisch verformbaren Masse der Formkörperschicht findet bevorzugt durch die Druckplatte statt. Dazu muss die Druckplatte für das Licht entsprechender Wellenlänge transparent sein. Dabei wird je nach eingesetztem Photoinitiator eine unterschiedliche Wellenlänge erforderlich. In der Regel wird die Photopolymerisation mit kurzwelligem Licht, also Licht im ultravioletten Spektrum initiiert. Als geeignet hat sich eine Druckplatte aus Quarzglas oder Saphirglas erwiesen. Bevorzugt ist die Druckplatte aus einem Material gewählt, welches über einen längeren Zeitraum ihre Durchlässigkeit für UV-Licht nicht ändert.

In einer alternativen Ausführungsform kann die Aushärtung der Formkörperschicht durch einen physikalischen Prozess erfolgen, wie zum Beispiel der Trocknung und/oder der Abkühlung. In einem konkreten Beispiel würde als plastisch verformbare Masse eine Schmelze angewandt werden, welche nach Abkühlung verfestigt. Somit liesse sich das erfindungsgemässe Verfahren auch mit einem Thermoplasten als plastisch verformbare Masse durchführen. Alternativ könnte das Aushärten mittels einer Trocknung und/oder Komplexierung und/oder Kristallisation stattfinden, wie das zum Beispiel beim Verdunsten eines Lösungsmittels in einem Klebstoff oder bei der Verhärtung von Zementen stattfindet.

In einer besonderen Ausführungsform werden die Druckplatte und der Schichtträger dergestalt relativ zueinander positioniert, dass die Formkörperschicht auf der Druckplatte den Schichtträger oder die ältere Formkörperschicht berührt und auf dem Schichtträger respektive relativ zu den älteren Formkörperschichten exakt so ausgerichtet wird, wie es für die Herstellung des gewünschten Formkörpers notwendig ist.

In einer besonderen Ausführungsform ist die Schichtdicke jeder Formkörperschicht konstant.

In einer alternativen besonderen Ausführungsform sind die Schichtdicken der einzelnen gemeinsam aufgetragenen Formkörperschichten variabel. Beispielsweise könnte ein formgebendes Werkzeug gewählt werden, welches Ausnehmungen zur Definition von einer Mehrzahl an Formkörperschichten aufweist. Alle diese Formkörperschichten können über die gleiche Schichtdicke verfügen. Das formgebende Werkzeug kann aber auch so ausgestaltet sein, dass es unterschiedliche Schichtdicken aufträgt. Entsprechend der Wahl der Abfolge der formgebenden Werkzeuge und der entsprechenden Formkörperschichten können somit besonders komplexe Strukturen als Formkörper aufgebaut werden. Die Druckplatte kann insbesondere so ausgestaltet sein, dass sie die Übertragung der Formkörperschicht auf den Schichtträger oder die ältere Formkörperschicht präzis positioniert. Somit können auch besonders kleine, filigrane oder verschachtelte Formkörperschichten aufgebaut und als Formkörper gestaltet werden.

In einer besonderen Ausführungsform ist die Druckplatte im Wesentlichen starr. Im Sinne der vorliegenden kann die Druckplatte als im Wesentlichen starr angesehen werden, wenn sie im erfindungsgemässen Betrieb keine nennenswerte Verformung erfährt. In diesem Fall widersteht die Druckplatte material- und/oder konstruktionsbedingt einer Durchbiegung. Dies ist insofern material- und/oder konstruktionsbedingt, als dass der Widerstand gegenüber einem verbiegenden Drehmoment abhängig ist von der Steifigkeit des Materials und der Grösse des Querschnitts der Druckplatte.

In einer Alternative zur eben genannten Ausführungsform ist die Druckplatte als Folie ausgestaltet. In einer solchen Ausführungsform kann das Übertragen der Formkörperschicht(en) von der Folie auf den Schichtträger durch ein Abziehen der Folie bewerkstelligt werden. Ein solches Abziehen würde ein Durchbiegen der Folie in mindestens einer Flächenausdehnung bedeuten und wäre vergleichbar mit dem Abziehen eines Pflasters oder Klebstreifens. Durch das besagte Verbiegen könnte die Formkörperschicht besser abgelöst werden. Insbesondere eine bereits vernetzte und/oder gehärtete Formkörperschicht könnte besser abgelöst werden, indem die Folie von der Kontaktfläche der Formkörperschicht abgezogen wird. Ein solches Abziehen kann zum Beispiel durch die Materialwahl der Folie ermöglicht werden, und/oder eine entsprechend dünn gewählte Schichtdicke. Bevorzugt beträgt die Schichtdicke der Folie weniger als 2'000 µm, insbesondere 10 - 2'000 µm, besonders bevorzugt 50 - 500 µm, im Speziellen 50 - 200 µm, ganz besonders bevorzugt 100 µm.

In dieser besonderen Ausführungsform kann weiter von Vorteil sein, wenn die Folie bei der Übertragung auf den Schichtträger starr gehalten wird. Bevorzugt wird die Folie dazu auf eine starre Unterlage gelegt.

In einer besonderen Ausführungsform ist die Folie durchlässig für Polymerisationsinduzierende elektromagnetische Strahlung, insbesondere durchlässig für UV-Strahlung. Dadurch kann die Aushärtung des Schichtträgers noch im Kontakt mit der Folie erfolgen, die dann anschliessend mit weniger Mühe von der Formkörperschicht abgezogen werden kann. Besonders bevorzugt ist die Folie auf mindestens der Kontaktseite welche die Formkörperschicht trägt mit einer Antihaft-Beschichtung versehen oder besteht aus einem Kunststoff mit entsprechenden Eigenschaften. Geeignete Materialien für eine Anti-haft Beschichtung der Folie sind fluorierte Kohlenwasserstoffe, wie zum Beispiel FEP (fluoriertes Ethylen-Propylen), EFTE (Etylen-Tetrafluorethylen) oder auch Polytetrafluorethylen (Teflon, DuPont). FEP und EFT haben zusätzlich den Vorteil der guten Durchlässigkeit von UV-Strahlung.

Ein weiterer Aspekt der vorliegenden Erfindung betrifft eine Vorrichtung zur Durchführung des erfindungsgemässen Verfahrens. Es versteht sich von selbst, dass die entsprechende Vorrichtung mit strukturellen Merkmalen versehen sein kann, um jedwede Kombination und Möglichkeit an oben genannten Verfahrensmerkmalen, welche sich nicht gegenseitig ausschliessen, aufweisen kann.

Grundsätzlich umfasst eine erfindungsgemässe Vorrichtung einen oder mehrere Schichtträger zur Aufnahme von zwei oder mehr Formkörperschichten. Sie umfasst weiter eine oder mehrere Druckplatte(n) und mindestens ein formgebendes Werkzeug, durch welches eine Formkörperschicht mit einer definierten Form auf die Druckplatte auftragbar ist. Dabei sind Druckplatte und/oder Schichtträger so ausgestaltet, dass aufgetragene Formkörperschichten relativ zueinander positionierbar und auf den Schichtträger oder eine bereits auf den Schichtträger vorhandene ältere Formkörperschicht übertragbar sind. Bevorzugt ist die Vorrichtung so ausgestaltet, dass sie eine präzise Ausrichtung der Druckplatte und des Schichtträgers relativ zu einander ermöglicht.

In einer bevorzugten Ausführungsform ist der Schichtträger so ausgestaltet, dass er im Wesentlichen eben ist und sich kaum deformiert. Im Sinne der vorliegenden Erfindung bedeutet dies, dass der Schichtträger so ausgestaltet sein kann, dass er den Betriebstemperaturen der Vorrichtung, ohne sich plastisch zu verformen, standhält. Ein entsprechender Schichtträger kann zum Beispiel ausreichend dick dimensioniert sein, dass er sich nicht verformt. Die konkreten Dimensionen können an die Ausmasse der Druckplatte resp. der Formschichten angepasst werden.

In einer besonderen Ausführungsform ist die Druckplatte bewegbar angeordnet, insbesondere drehbar angeordnet.

In einer besonderen Ausführungsform ist die Druckplatte für Lichtwellen durchlässig, insbesondere ist die Druckplatte für UV-Licht durchlässig.

In einer besonders bevorzugten Ausführungsform ist die Druckplatte im Wesentlichen aus Quarzglas oder Saphirglas.

In einer bevorzugten Ausführungsform ist die Druckplatte mit mindestens einer haftreduzierenden Oberfläche versehen. Alternativ oder zusätzlich ist die Druckplatte aus einem im Wesentlichen haftreduzierenden Material. Insbesondere ist die Druckplatte mit einer haftreduzierenden Oberfläche versehen, ausgewählt aus der Gruppe bestehend aus: einbrennsilikonisierte Oberfläche, Polysilanbeschichtung, Fluorpolymerbeschichtung, fetthaltige Beschichtung, wachshaltige Beschichtung und/oder Silikatbeschichtung.

In einer besonderen Ausführungsform ist der Schichtträgerso ausgestaltet, dass er auch unter thermischer Belastung, vorzugsweise bei Temperaturen von über 500 °C, besonders bevorzugt über 800 °C eine hohe Steifigkeit und chemische Inertheit aufweist. Besonders bevorzugt ist der Schichtträger im Wesentlichen aus einem Material wie Aluminiumoxid, Korund, Siliziumkarbid oder Saphir.

In einer besonderen Ausführungsform umfasst die Vorrichtung eine Mehrzahl formgebender Werkzeuge. Bevorzugt weist jedes formgebende Werkzeug Ausnehmungen auf resp. ist so ausgestaltet, dass es eine andere Form definiert.

In einer besonderen Ausführungsform ist das formgebende Werkzeug so ausgestaltet, dass in einem Druckvorgang mehrere Formschichten miteinander gedruckt werden, die dann eine nach der anderen relativ zum Schichtträger respektive den älteren Formschichten ausgerichtet, gehärtet und von der Druckplatte gelöst werden. Das ermöglicht die Zahl unterschiedlicher Druckschablonen oder Drucksiebe zu reduzieren.

In einer besonderen Ausführungsform umfasst die Vorrichtung ein Mittel zum Auftragen eines Haftvermittlers auf eine Formkörperschicht auf dem Schichtträger. Insbesondere umfasst die Vorrichtung eine Sprühvorrichtung, oder eine Rolle oder ein Stempelkissen zum Auftragen eines Haftvermittlers auf eine Formkörperschicht und/oder auf den Schichtträger.

In einer besonderen Ausführungsform umfasst die Vorrichtung ein/eine Rakel zum Ausstreichen einer verformbaren Masse auf dem formgebenden Werkzeug, sodass eine Formkörperschicht durch Ausnehmungen des formgebenden Werkzeugs auf der Druckplatte aufgetragen wird.

In einer besonderen Ausführungsform ist die Druckplatte im Wesentlichen starr. Im Sinne der vorliegenden kann die Druckplatte als im Wesentlichen starr angesehen werden, wenn sie im erfindungsgemässen Betrieb keine nennenswerte Verformung erfährt. In diesem Fall widersteht die Druckplatte material- und/oder konstruktionsbedingt einer Durchbiegung. Dies ist insofern material- und/oder konstruktionsbedingt, als dass der Widerstand gegenüber einem verbiegenden Drehmoment abhängig ist von der Steifigkeit des Materials und der Grösse des Querschnitts der Druckplatte.

In einer besonderen Ausführungsform ist die Druckplatte als Folie ausgestattet, insbesondere ist durch ihre Querschnittsdicke und/oder Materialbeschaffenheit gewährleistet, dass sie in mindestens einer Flächenausdehnung ausreichend flexibel ist, dass eine reversible Durchbiegung möglich ist, so dass die Folie von einer ausgehärteten Formkörperschicht abgezogen werden kann.

In einer besonderen Ausführungsform umfasst die Folie eine Beschichtung auf, welche selbst sehr reaktionsträge ist, und einen geringen Reibungskoeffizienten aufweist. Bevorzugt weist die Beschichtung einen dynamischen Reibungskoeffizienten von weniger als 0,1 auf. In einer besonders bevorzugten Ausführungsform weist das Material einen dynamischen Reibungskoeffizienten auf, der gleich ist dem Haftreibungskoeffizienten des besagten Materials. In einer ergänzenden oder alternativen Ausführungsform besteht die Folie aus einem solchen Material.

Bevorzugt umfasst die Folie, oder besteht sie, aus einem Material bestehend aus der Gruppe der fluorierten Kohlenwasserstoffe, besonders bevorzugt FEP und/oder ETFE.

Ein weiterer Aspekt der vorliegenden Erfindung betrifft die Verwendung eines aus einem erfindungsgemässen Verfahren resultierenden Formkörpers zur Herstellung dreidimensionaler Mikrostrukturen für verfahrenstechnische Anwendungen. Insbesondere können Formkörper mit komplexen Hohlräumen und Kapillaren in ihrem Innern hergestellt werden. Die erzeugten Formkörper können auch vorteilhaft für den Automobilbau, den Flugzeugbau und Windturbinen eingesetzt werden, da sie sich besonders eignen, um Leichtbaustrukturen zu erzeugen.

Da das erfindungsgemässe Verfahren es erlaubt, Materialien mit unterschiedlichen elektrischen Eigenschaften zu kombinieren, können in einer besonderen Ausführungsform Formkörper hergestellt werden, die elektrische Leiterbahnen enthalten. Ausserdem können auch Materialien mit unterschiedlichen magnetischen Eigenschaften, darunter auch permanentmagnetische Materialien verarbeitet werden. Dadurch lassen sich Sensoren, zum Beispiel Temperatursensoren, Drucksensoren und mehr, oder Aktuatoren, zum Beispiel rotierende Elektromotoren oder Linearmotoren, mittels des erfindungsgemässen Verfahrens erzeugen und in Formkörpern integrieren.

Die erfindungsgemässen Formkörper können besonders filigrane Strukturen und Geometrien aufweisen.

Ein weiterer Aspekt der vorliegenden Erfindung sieht die Verwendung der aus dem erfindungsgemässen Verfahren resultierenden Formkörper als Katalysatorträger mit direkt in den Formkörper gedruckten katalytisch aktiven Schichten vor. Dies ermöglicht es, die Schichtdicke der katalytisch aktiven Schicht im Innern von komplexen Formkörpern, wie sie mit dem erfindungsgemässen Verfahren erstellt werden können, präzise vorzugeben. Dadurch können mit dem vorliegenden Verfahren hochselektive chemische Reaktoren realisiert werden. Bevorzugt werden die katalytisch aktiven Schichten durch die Wahl einer entsprechenden plastisch verformbaren Masse in der erforderlichen Schichtdicke aufgetragen.

Weitere mögliche Anwendungsgebiete der durch das erfindungsgemässe Verfahren herstellbaren Formkörper sind nicht abschliessend: mikrostrukturierte Katalysatoren, Wärmetauscher, Strukturen zur Förderung des Stoffaustauschs, Flüssigkeitsverteiler, Separatoren, Sensoren, Aktuatoren, etc.

Insgesamt bietet das erfindungsgemässe Verfahren eine Reihe von Vorteilen. Gegenüber einem direkten Druckverfahren ist es zum Beispiel einfacher, mit dem erfindungsgemässen Verfahren unterschiedliche Formkörperschichten in einer Ebene zu kombinieren. Dazu ist es besonders geeignet zur Herstellung von Strukturen mit mehreren unterschiedlichen Materialien. Die Oberfläche der Druckplatte kann so gewählt werden, dass das Druckbild einzelner Formkörperschichten insbesondere bei der Verwendung von Druckschablonen aber auch bei Drucksieben besonders gut wird und dadurch der ganze Formkörper besonders genau abgebildet werden kann. Die jeweiligen formgebenden Werkzeuge können so gewählt werden, dass einzelne besonders dicke oder besonders dünne Formkörperschichten erzeugt werden können. Durch die Möglichkeit, besonders dicke Schichten zu erzeugen, können die Anzahlen einzelner Druckvorgänge reduziert werden, was insgesamt die Effizienz wieder steigert. Die Positionierung der Formkörperschicht findet bei der Übertragung der Formschicht von der Druckplatte auf den Schichtträger statt. Dadurch erübrigt sich ein Erfordernis der präzisen Positionierung des formgebenden Werkzeugs relativ zur Druckplatte und des Druckvorgangs. Somit kann der Druckvorgang insgesamt einfacher und effizienter sowie günstiger durchgeführt werden.

Sämtliche besondere Ausführungsformen lassen sich im Rahmen der vorliegenden Erfindung beliebig kombinieren, sofern sie sich nicht gegenseitig ausschliessen.

Im Folgenden wird die Erfindung anhand konkreter Ausführungsbeispiele und Detailbeschreibungen näher erläutert, ohne jedoch auf diese beschränkt zu sein. Im Übrigen ergeben sich aus dieser Detailbeschreibung und der Gesamtheit der Patentansprüche weitere vorteilhafte Ausführungsformen und Merkmalskombinationen der vorliegenden Erfindung.

### Kurze Beschreibung der Zeichnungen

Die zur Erläuterung der Ausführungsbeispiele verwendeten Zeichnungen zeigen schematisch:
- Fig. 1: Ein schematisch vereinfachtes Flussdiagramm eines erfindungsgemässen Verfahrens;
- Fig. 2: Eine leere Druckplatte;
- Fig. 3: Die Generierung von Formkörperschichten mittels eines formgebenden Werkzeugs;
- Fig. 4: Die erzeugten Formkörperschichten auf der Druckplatte;
- Fig. 5: Die Positionierung der Druckplatte über dem Schichtträger;
- Fig. 6: Der Schichtträger mit den Formkörperschichten;
- Fig. 7: Ein folgender Druck;
- Fig. 8: Die Übertragung der folgenden Formkörperschichten auf die älteren Formkörperschichten;
- Fig. 9: Der Schichtträger mit zwei Ebenen an Formkörperschichten;
- Fig. 10: Beispiel mit unterschiedlich geformten Formkörperschichten;
- Fig. 11: Beispiel eines komplex aufgebauten Formkörpers aus mehreren Ebenen und Formkörperschichten;
- Fig. 12: zeigt schematisch eine zur Durchführung des erfindungsgemässen Verfahrens geeignete Vorrichtung.

Grundsätzlich sind in den Figuren gleiche Teile mit gleichen Bezugszeichen versehen.

### Wege zur Ausführung der Erfindung

### Beispiel 1

Ein Beispiel einer verformbaren Masse, bei der Photopolymere als Binder eingesetzt werden, sei hier beschrieben. Die Masse ist für die Herstellung von keramischen Strukturen basierend auf Aluminiumoxid gedacht. Sie besteht zu rund 80 % der Masse aus Aluminiumoxidpulver, einer Qualität für hochwertige technische Keramik und einer mittleren Korngrössen von wenigen Mikrometern. Als Binder wird Hexane-1,6-Diol-Diacrylat eingesetzt. Zur Steuerung der rheologischen Eigenschaften werden kleine Mengen von geeigneten Dispersionshilfsmitteln hinzu gegeben. Als Photoinitiator wird 0.5% 2,2-Dimethoxy-2-Phenylacetophenone beigemischt.

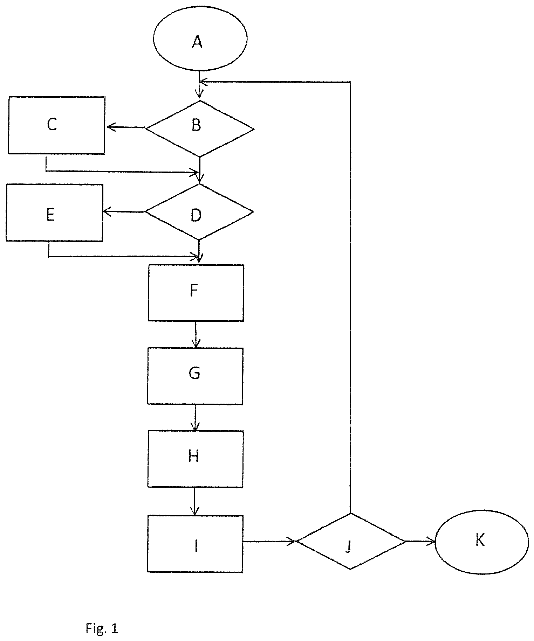

In der Fig. 1 ist eine Durchführung des erfindungsgemässen Verfahrens exemplarisch als Flussdiagramm dargestellt. Zunächst wird ein Schichtträger zur Aufnahme der Formkörperschicht und des resultierenden Formkörpers bereitgestellt A.

Der Schichtträger kann im vorliegenden Beispiel aus einer ebenen Saphirglasplatte mit einer Schichtdicke von 2 mm gebildet sein. In einem ersten Schritt kann nun auf die Oberfläche des Schichtträgers ein dünner Film eines Haftvermittlers aufgetragen werden, damit später die Benetzung und dadurch auch die Verbindung zwischen dem Schichtträger und der neuen Formschicht besser wird. Dazu kann ein Stempelkissen, eine Rolle oder eine Sprühdüse verwendet werden C. Dieser Schritt ist aber nicht zwingend und kann in einigen Fällen weggelassen werden B.

Weiter wird eine Druckplatte bereitgestellt. Damit später der Schritt I besser durchgeführt werden kann, wird die Oberfläche der Druckplatte so modifiziert, dass die Haftung der ausgehärteten Formkörperschicht darauf nur sehr gering ist. Dazu können verschiedene Techniken eingesetzt werden. Geeignete Massnahmen zur Reduktion der Haftung der Formkörperschicht sind zum Beispiel eine Einbrenn-Silikonisierung, eine dünne Beschichtung mit synthetischen Wachsen, eine Beschichtung mit Polydimethylsiloxan oder anderen Polysilanen, eine dünne fetthaltige Schicht oder eine dünne Silikatschicht. Einige der beschriebenen Verfahren zur Reduktion der Haftung der Formkörperschicht auf der Druckplatte erfordern eine regelmässige Wiederholung der Behandlung der Druckplatte vor einzelnen Durchgängen oder vor jedem Durchgang. Falls das der Fall ist, wird die Druckplatte geeignet für den Druck vorbereitet D, E.

Auf diese Druckplatte wird nun mittels einer Schablone, welche Ausnehmungen in der Form der bei diesem Druckvorgang resultierenden Formkörperschicht aufweist, die plastisch verformbare Masse aufgetragen. Dazu wird die Schablone im Wesentlichen mit der plastisch verformbaren Masse gefüllt und mittels eines Rakel aufgestrichen, sodass ein Durchdruck durch die Schablone auf die Druckplatte stattfindet. Danach wird die Schablone entfernt.

Die Druckplatte und der Schichtträger werden anschliessend relativ zueinander exakt positioniert, so dass deren Abstand der gewünschten Schichtdicke entspricht und dass die Formkörperschicht auf dem Schichtträger exakt wie gewünscht ausgerichtet ist G. Dies geschieht so, dass die Formkörperschicht den Schichtträger physisch kontaktiert. Eine Möglichkeit, das durchzuführen, ist, die Druckplatte im Wesentlichen um 180° zu drehen und über den fest montierten Schichtträger auszurichten. Eine andere Möglichkeit ist es, mit einer fest montierten Druckplatte zu arbeiten und den Schichtträger darüber zu positionieren.

Die Masse, die die Formkörperschicht bildet, wird nun ausgehärtet H. Bei Massen, die auf Photopolymeren basieren, geschieht dies zum Beispiel durch die Strahlen einer Lampe, deren Licht die Wellenlängen enthält, die den Photoinitiator anregen, durch die transparente Druckplatte hindurch. Häufig liegt der für diese Anregung relevante Wellenlängenbereich bei sehr kurzwelligen Frequenzen im ultravioletten Bereich des Lichtspektrums. Beim Photoinitiator des oben genannten Beispiels, 2,2-Dimethoxy-2-Phenylacetophenone liegt die relevante Wellenlänge zum Beispiel bei 280nm. Als transparente Druckplatte kommt in diesem Fall eine Quarzglasplatte oder eine Saphirglasplatte in Frage, die sowohl die notwendige Stabilität und Robustheit als auch eine genügende Transparenz gegenüber von Licht im ultravioletten Wellenlängenbereich aufweisen. Bei anderen verformbaren Massen kann der Aushärtungsschritt durch thermisch induzierte Polymerisation oder durch thermisch beschleunigte physikalische Trocknung der Masse erfolgen.

Nach der Aushärtung haftet die Formkörperschicht am Schichtträger. Danach wird die ausgehärtete Schicht von der Druckplatte gelöst und dadurch die Formkörperschicht von der Druckplatte auf den Schichtträger übertragen I.

Zur Erleichterung des Ablösens der Formkörperschicht von der Druckplatte wurde die Oberfläche der Druckplatte so modifiziert, dass die Formkörperschicht an ihr nur sehr wenig haftet (siehe Schritt C). Die Haftung der Formkörperschicht am Schichtträger ist deswegen deutlich stärker als an der Druckplatte und bei der Trennung bleibt die Formkörperschicht auf dem Schichtträger respektive auf den älteren Formkörperschichten.

Wird der Druck fortgesetzt, das heisst, sind weitere Formkörperschichten vorgesehen J, so beginnt der Prozess wieder bei Schritt B. Ist dies der zweite oder spätere Druck, so werden die Druckplatte und der Schichtträger so relativ zueinander positioniert, dass die aktuelle Formkörperschicht die ältere Formkörperschicht kontaktiert. Selbstverständlich ist es auch möglich, Formkörperschichten benachbart zu übertragen, das heisst, sodass auch die aktuelle Formkörperschicht den Schichtträger kontaktiert. Dies ist insbesondere dann sinnvoll, wenn man Formkörperschichten aus verschiedenen Materialien, aber mit verschiedenen Schablonen drucken will.

Auch mit der zweiten oder folgenden Formkörperschicht wird nun auf die ältere Formkörperschicht wahlweise eine dünne Schicht Haftvermittler aufgetragen, so dass sich eine vollständigere Benetzung der älteren Formkörperschicht durch die neue ergeben wird C.

Auch mit der zweiten oder folgenden Formkörperschicht wird nun die Druckplatte wahlweise so vorbehandelt, dass sich die Formkörperschicht davon später leicht lösen lässt E.

Wurden alle gewünschten Formkörperschichten erzeugt, ausgehärtet und auf den Formkörperträger übertragen, wird der Prozess beendet K. Je nach verwendeter verformbarer Masse resp. nach dem Material, aus dem das fertige Teil bestehen soll, muss der so auf dem Schichtträger erzeugte Formkörper bestehend aus zwei oder mehr Formkörperschichten abschliessend noch einer thermischen Behandlung, zum Beispiel eine Sinterung oder eine Pyrolyse, zugeführt werden.

Die Anzahl der Durchläufe H wird von der gewünschten Anzahl Formkörperschichten bestimmt. Dabei kann der ganze Prozess computergesteuert ablaufen. Das heisst, eine Vorrichtung kann mit einem Rack mit einer bestimmten definierten Anzahl Schablonen ausgestaltet sein, um eine definierte Abfolge an Druckvorgängen durchzuführen. Diese Vorrichtung kann modular ausgestaltet sein, wodurch die entsprechenden Werkzeuge flexibel ausgetauscht werden können.

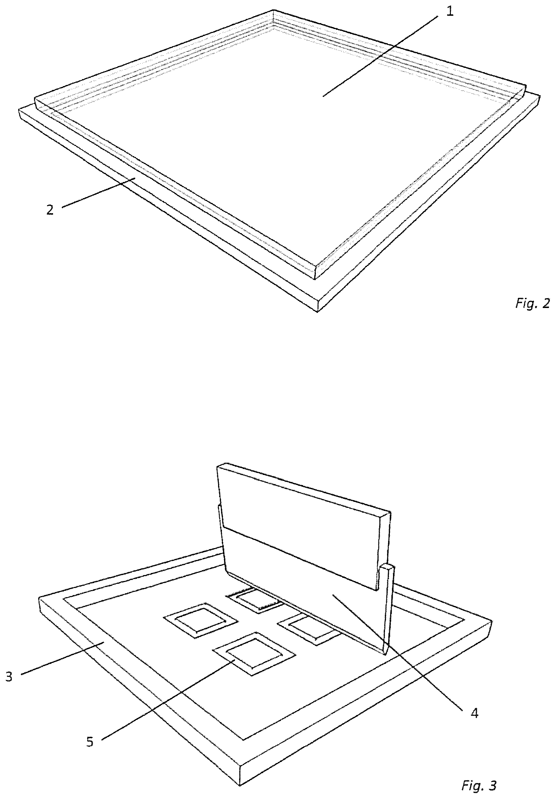

In den Fig. 2 bis 11 wird die Durchführung des Verfahrens nochmals schrittweise anhand der einzelnen Verfahrensschritte exemplarisch illustriert.

Fig. 2 zeigte eine zur Verwendung im erfindungsgemässen Verfahren geeignete Druckplatte 1. Die Druckplatte 1 ist aus einem Quarzglas und verfügt über einen Rahmen 2.

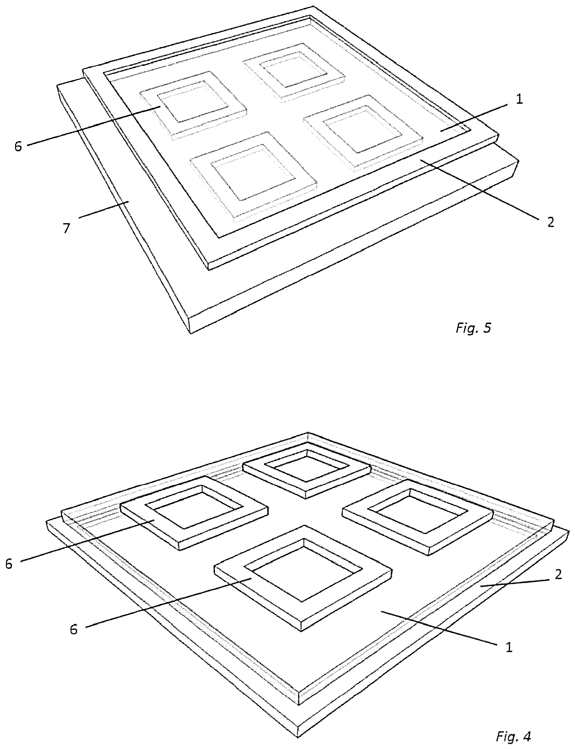

Mittels einer Schablone 3 wird eine plastisch verformbare Masse (nicht gezeigt) durch die Ausnehmungen 5 mit Hilfe eines Rakel 4 auf die in der Fig. 2 dargestellte Druckplatte 1 aufgetragen. Es entsteht ein Druckbild, welches eine Formkörperschicht des zu erzeugenden Formkörpers bildet. In der Fig. 4 ist die entsprechend bedruckte Druckplatte 1 dargestellt. Darauf sind vier identische Formkörperschichten 6 gezeigt, deren Form über die Ausnehmungen 5 der Schablone 3 definiert wurden. In der Fig. 5 wird gezeigt, wie die Druckplatte 1nun mitsamt den Formkörperschichten 6 über den Schichtträger 7 positioniert wird, dergestalt, dass die Formkörperschichten 6 den Schichtträger 7 kontaktieren. In dieser Position werden die Formkörperschichten zwischen der Druckplatte und dem Schichtträger ausgehärtet.

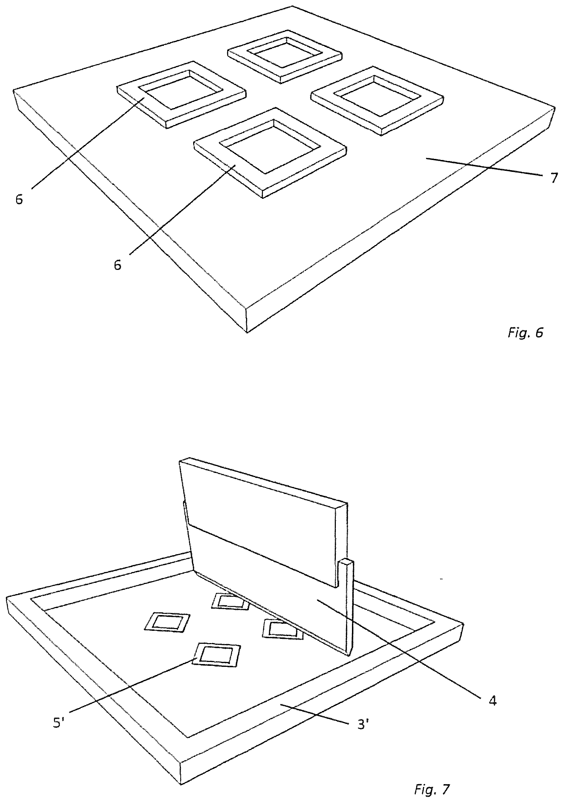

In der Fig. 6 ist der entsprechende Schichtträger 7 mit den nun darauf befindlichen Formkörperschichten 6 gezeigt, nachdem die Druckplatte von der ausgehärteten Formschicht abgelöst wurde. Inzwischen wurde die Druckplatte 1 erneut bereitgestellt.

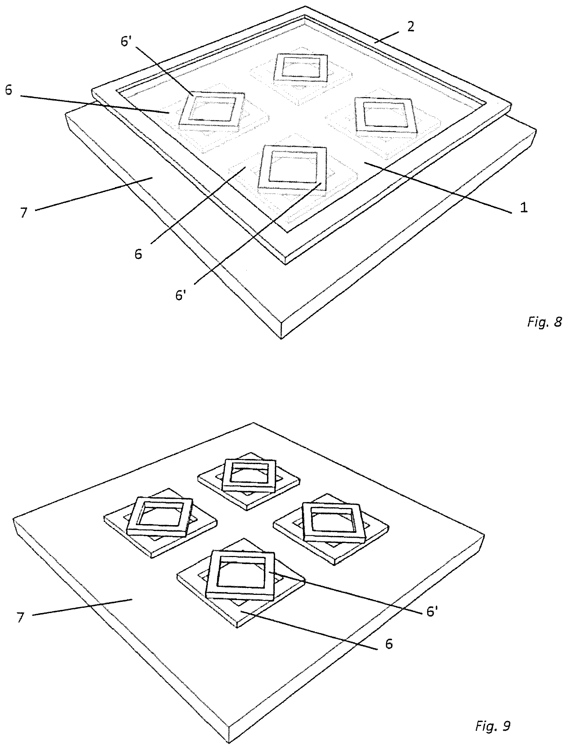

In der Fig. 7 ist eine weitere Schablone 3' mit einem abweichenden Ausnehmungsmuster und Ausnehmungen 5' gezeigt, bei welchem analog mittels eines Rakel 4 die plastisch verformbare Masse (nicht gezeigt) auf die Druckplatte 1 aufgedruckt wurde. Diese erneut bedruckte Druckplatte wird nun ebenfalls über dem Schichtträger 7 positioniert, was in der Fig. 8 dargestellt ist. Die Formkörperschichten 6' werden dabei mit den älteren Formkörperschichten 6 kontaktiert. In diesem Zustand werden die Formkörperschichten 6' ausgehärtet. Bei den Prozessschritten der Aushärtung der Fig. 5 und 8 kann ein Polymerisationsschritt einfach durchgeführt werden, indem Licht der entsprechend erforderlichen UV-Wellenlänge durch die transparente Druckplatte 1 auf die zu härtenden Formkörperschichten 6, 6' beaufschlagt wird.

Die Formkörperschichten 6' gehen mit den älteren Formkörperschichten 6 Verbindungen ein, sodass der resultierende Formkörper im Wesentlichen einstückig ist. Die Verbindungen können materialschlüssig sein. Es kann auch zu Vernetzungen bei bestimmten Materialien kommen.

In der Fig. 9 ist der Schichtträger 7 mit mittlerweile vier Formkörpern dargestellt, welche zwei Ebenen aufweisen und aus zwei integral miteinander verbundenen Formkörperschichten 6, 6' bestehen.

Die vorangegangenen Schritte können beliebig oft wiederholt werden. Auch ist es nicht zwingend erforderlich, dass die aktuellen Formkörperschichten aufbauend auf die älteren Formkörperschichten positioniert werden.

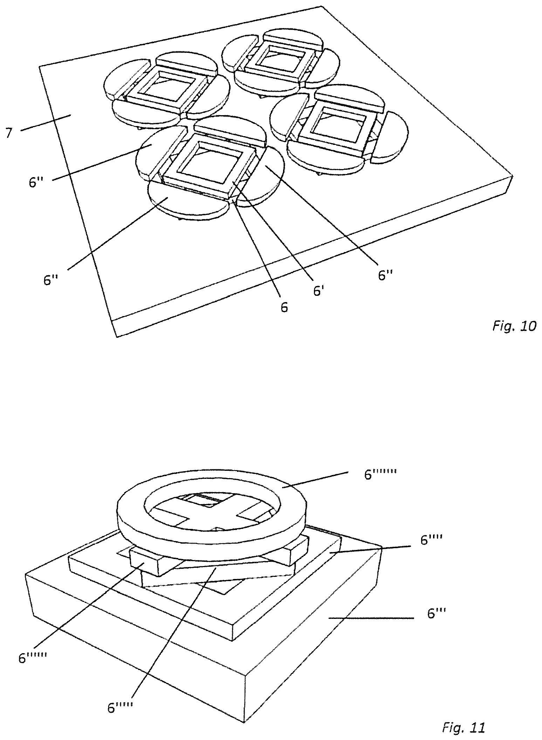

Am Beispiel der Fig. 10 sind vier Formkörper gezeigt, bei denen die Formkörper aus insgesamt drei Formkörperschichten 6, 6', 6" bestehen, welche jeweils in einem Druckvorgang erzeugt wurden. Insgesamt bestehen die Formkörper aber aus lediglich zwei Schichtebenen.

In der Fig. 11 ist exemplarisch ein Formkörper mit fünf Schichtebenen gezeigt, welcher aus fünf Formkörperschichten 6''', 6'''', 6''''', 6'''''', 6''''''' besteht.

Grundsätzlich sind die einfachen geometrischen Strukturen in den Figuren lediglich zu Anschauungszwecken so gewählt. Grundsätzlich sind den Formkörperschichten und ihren Ausgestaltungen keine Grenzen gesetzt.

Geeignet ist das erfindungsgemässe Verfahren auch zur Herstellung dreidimensionaler Formkörper, wie sie in der WO 2014/043823 A1 gezeigt sind. Diese Formkörper verfügen über mehrere stegweise übereinander gelagerte Formkörperschichten.

Die Formkörperschichten der vorliegenden Erfindung können Schichtdicken von 10 µm bis zu 50 mm aufweisen. Besonders bevorzugt weisen sie Schichtdicken von zwischen 50 und 3000 µm auf. Insgesamt kann ein erfindungsgemässer Formkörper Aussenabmessungen von zwischen 1 mm und 5000 mm, insbesondere zwischen 4 und 500 mm, insbesondere zwischen 10 und 300 mm, insbesondere um die 50 mm aufweisen, je nach Anwendung. Diese Grössen sind besonders für die Herstellung von Mikromischern und Katalysatoren geeignet. Für grössere Bauteile in Leichtbauweise können die entsprechenden Dimensionen grösser sein.

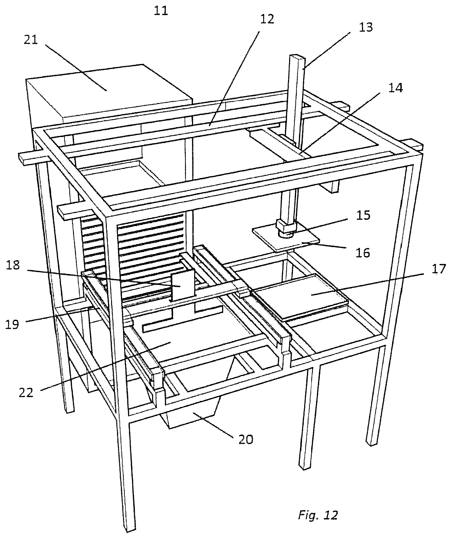

In der Fig. 12 wird exemplarisch eine zur Durchführung des erfindungsgemässen Verfahrens geeignete Vorrichtung 11 schematisch dargestellt. Die Vorrichtung 11 umfasst im Wesentlichen einen Rahmen, welcher die entsprechenden Führungen aufweist, um die bewegbaren Teile der Vorrichtung zu bedienen. Ein Schienensystem dient dazu, einen Schichtträger 16 zu positionieren. Dieses Schienensystem umfasst eine X-Achse des Positionierungssystems 12, eine Y-Achse des Positionierungssystems 14 und eine Z-Achse des Positionierungssystems 13. Zusätzlich ist der Schichtträger 16 über eine gelenkig gelagerte Rotationsverbindung 15 mit der Z-Achse des Positionierungssystems 13 verbunden. Dies ermöglicht dem Schichtträger in allen Achsen bewegbar die notwendige Positionierung einzunehmen, um das erfindungsgemässe Verfahren durchzuführen. Ein entsprechendes formgebendes Werkzeug kann in einem Schablonenmagazin 21 gelagert werden. Durch dieses Schablonenmagazin 21 ist es möglich, eine Reihe von vordefinierten formgebenden Werkzeugen, wie zum Beispiel Schablonen oder Siebe, vorzubereiten und somit den Druck zu automatisieren. Im Betrieb übernimmt eine Wechselvorrichtung das Herausfahren der Schablonen 22 (beispielhaft) über die Druckplatte (nicht gezeigt). Eine Rakel 18 ist über der Schablone 22 in Position, um die entsprechende Masse, welches aus einem automatischen Dispenssystem (nicht gezeigt) aufgetragen wird, auszustreichen.

Gleichzeitig kann der Schichtträger 15 mittels eines Stempelkissens 17 mit einem entsprechenden Haftvermittler imprägniert werden. Das Positionierungssystem des Schichtträgers 16 kann mittels eines Visionssystems, bestehend aus Kamera, Objektiv und Analysesoftware, bestimmt werden. Dieses System ist in der vorliegenden Darstellung der Einfachheit halber nicht gezeigt. Ist der Druckvorgang abgeschlossen, wird die verwendete Schablone wieder über die Führungen 19 des automatischen Wechselsystems in das Magazin 21 zurückgeschoben. Nun kann der Schichtträger 16 mittels des Positionierungssystems auf die Druckplatte abgesenkt und exakt ausgerichtet werden. Ein UV-Strahler 20 kann nun durch die transparente Druckplatte die Polymerisation und Aushärtung initiieren. Sobald die Aushärtung abgeschlossen ist, kann der Schichtträger 16 wieder abgehoben werden. Durch diese Bewegung wird im vorliegenden Beispiel die Formkörperschicht von der Druckplatte abgelöst und bildet auf dem Schichtträger 16 eine ältere Formkörperschicht.

Diese hier dargestellte Vorrichtung ist lediglich exemplarisch gezeigt und kann mit mehreren Druckplatten mit dazugehörigen Schablonenwechselvorrichtungen für den gleichzeitigen Druck mehrerer Bauteile ausgebaut werden.

## Patentansprüche

1. Verfahren zur Herstellung von Formkörpern aus zwei oder mehr Formkörperschichten (6, 6', 6"), umfassend die Schritte
a) Bereitstellen eines Schichtträgers (7) zur Aufnahme mindestens einer Formkörperschicht (6);
b) Auftragen einer Formkörperschicht (6) auf eine Druckplatte (1), wobei die Formkörperschicht (6) durch ein formgebendes Werkzeug (3) auf die Druckplatte (1) aufgetragen wird;
c) Positionieren von Druckplatte (1) und/oder Schichtträger (7) respektive einer älteren Formkörperschicht (6) relativ zueinander, insbesondere Kontaktieren der Formkörperschicht (6, 6') mit dem Schichtträger (7) oder einer älteren Formkörperschicht (6);
d) Aushärten der Formkörperschicht (6, 6') so dass sie selbst zu einer älteren Formkörperschicht wird oder mit einer solchen einen Verbund bildet und Übertragen der Formkörperschicht(en) von der Druckplatte (1) auf den Schichtträger (7);
e) Eventuell Bereitstellen der Druckplatte (1) zur Aufnahme weiterer Formkörperschichten (6', 6") und wiederholen der Schritte b) bis d).

2. Verfahren gemäss Anspruch 1, wobei das formgebende Werkzeug (3, 3') eine Schablone ist, insbesondere die Formkörperschicht (6, 6') durch Ausnehmungen (5, 5') des formgebenden Werkzeugs (3, 3') definiert wird, wobei bevorzugt eine plastisch verformbare Masse durch die Ausnehmungen (5, 5') des formgebenden Werkzeugs (3, 3') auf die Druckplatte (1) zur Bildung der Formkörperschicht (6, 6') aufgetragen wird, insbesondere wird als verformbare Masse eine Paste mit thixotropen Eigenschaften verwendet.

3. Verfahren gemäss einem der Ansprüche 1 bis 2, wobei die Druckplatte (1) so ausgestaltet ist, dass die Formkörperschicht (6, 6', 6") darauf schlecht haftet, insbesondere eine Oberflächenenergie von kleiner als 40 mN/m aufweist, insbesondere eine Oberflächenenergie von kleiner als 30 mN/m aufweist, insbesondere eine Oberflächenenergie von kleiner als 20 mN/m aufweist.

4. Verfahren gemäss einem der Ansprüche 1 bis 3, wobei die ältere Formkörperschicht (6, 6') auf dem Schichtträger (7) oder der Schichtträger (7) selbst mit einem Haftvermittler versehen wird, bevor eine nächste Formkörperschicht (6', 6") darauf übertragen wird.

5. Verfahren gemäss einem der Ansprüche 1 bis 4, wobei das Verfahren nach Schritt d) noch den Schritt folgenden Schritt umfasst:
f) Ablösen der Druckplatte (1) von der ausgehärteten Formkörperschicht (6).

6. Verfahren gemäss einem Anspruch 5, wobei mindestens eine einer Mehrzahl an plastisch verformbaren Massen als Stützmasse des Formkörpers (6, 6', 6") dient und mittels mechanischer, chemischer oder physikalischer Verfahren wieder aus dem Formkörper (6, 6', 6") entfernt werden können.

7. Verfahren gemäss einem der Ansprüche 1 bis 6, wobei der Formkörper gesintert wird, insbesondere nach Abschluss des Aufbaus des Formkörpers gesintert wird.

8. Verfahren gemäss einem der Ansprüche 1 bis 7, wobei das Aushärten einen Polymerisationsschritt umfasst, insbesondere einen Polymerisationsschritt ausgewählt aus der Gruppe der photoinduzierten, thermoinduzierten oder chemoinduzierten Polymerisation umfasst, wobei im Besonderen eine photoniduzierte Polymerisation durch das Beaufschlagen der Formkörperschicht (6, 6', 6") mit Licht durch die Druckplatte (1) erfolgt.

9. Verfahren nach einem der Ansprüche 1 bis 8, wobei die Druckplatte (1) als Folie ausgestaltet ist und das Übertragen der Formkörperschicht(en) (6, 6', 6") von der Druckplatte (1) auf den Schichtträger (7) ein Abziehen der Folie umfasst.

10. Vorrichtung (11) zur Durchführung eines Verfahrens gemäss einem der Ansprüche 1 bis 9, umfassend:
a) Einen Schichtträger (16) zur Aufnahme mindestens einer Formkörperschicht;
b) Eine Druckplatte, und
c) Ein formgebendes Werkzeug, durch welches eine Formkörperschicht mit einer definierten Form auf die Druckplatte auftragbar ist, und
wobei die Druckplatte und/oder der Schichtträger (16) so ausgestaltet sind, dass eine auf der Druckplatte aufgetragene Formkörperschicht relativ zum Schichtträger (16) positionierbar und auf den Schichtträger (16) oder eine bereits auf dem Schichtträger (16) vorhandene ältere Formkörperschicht übertragbar ist, insbesondere sind Druckplatte und/oder der Schichtträger (16) so ausgestaltet, dass die Formkörperschicht im Kontakt mit dem Schichtträger (16) und/oder einer älteren Formkörperschicht aushärtbar ist und durch Ablösen der Druckplatte auf den Schichtkörper (16) übertragbar ist.

11. Vorrichtung (11) gemäss Anspruch 10, wobei die Druckplatte für Lichtwellen durchlässig ausgestaltet ist, insbesondere für UV-Licht durchlässig ist, bevorzugt im Wesentlichen aus Quarzglas oder Saphirglas besteht und/oder wobei die Druckplatte mit mindestens einer haftreduzierenden Oberfläche versehen ist oder im Wesentlichen aus einem haftreduzierenden Material besteht, insbesondere ist die Druckplatte mit einer haftreduzierenden Oberfläche versehen ausgewählt aus der Gruppe bestehend aus: einbrennsilikonisierte Oberfläche, Fluoropolymer-Beschichtung, Polysilan-Beschichtung, Fetthaltige-Beschichtung, Wachshaltige-Beschichtung, oder Beschichtung aus einer Silikatschicht.

12. Vorrichtung (11) gemäss einem der Ansprüche 10 bis 11, wobei der Schichtträger (16) so ausgestaltet ist, dass er auch unter thermischer Belastung, vorzugsweise bei Temperaturen von über 500°C eine hohe Steifigkeit aufweist, bevorzugt im Wesentlichen aus einem Material besteht ausgewählt aus der Gruppe bestehend aus: Aluminiumoxid, Korund, Siliziumkarbid oder Saphir.

13. Vorrichtung (11) gemäss einem der Ansprüche 10 bis 12, umfassend eine Mehrzahl formgebender Werkzeuge, wobei jedes einzelne formgebende Werkzeug so ausgestaltet ist, dass es eine andere Form definiert und/oder wobei das formgebende Werkzeug so ausgestaltet ist, dass es eine Vielzahl an Formen definiert.

14. Vorrichtung (11) gemäss einem der Ansprüche 10 bis 13, umfassend ein Mittel zum Auftragen eines Haftvermittlers auf eine Formkörperschicht auf dem Schichtträger, insbesondere umfassend eine Sprühvorrichtung zum Auftragen eines Haftvermittler auf eine Formkörperschicht auf dem Schichtträger oder eine Rolle/oder ein Stempelkissen (17) zum Auftragen eines Haftvermittlers auf eine Formkörperschicht auf dem Schichtträger (16).

15. Vorrichtung (11) gemäss einem der Ansprüche 10 bis 14, wobei die Druckplatte als Folie ausgestaltet ist, so dass sie mindestens in einer Abzugsrichtung durchbiegbar ist, insbesondere wobei die Druckplatte als Folie ausgestaltet ist und eine Dicke von weniger als 2'000 µm, insbesondere 10 - 2'000 µm, besonders bevorzugt 50-500 µm, im Speziellen 50 - 200 µm, ganz besonders bevorzugt 100 µm, aufweist.

## Claims

1. A method for manufacturing molded articles consisting of two or more molded article layers (6, 6', 6"), comprising the steps
a) A layer carrier (7) is made available for accommodating at least one molded article layer (6);
b) A molded article layer (6) is applied onto a printing plate (1), wherein the molded article layer (6) is applied by a shaping tool (3) onto the printing plate (1);
c) Positioning of printing plate (1) and/or layer carrier (7) with respect to an older molded article layer (6) and relative to one another, in particular contacting the molded article layer (6, 6') to the layer carrier (7) or to an older molded article layer (6);
d) Curing of the molded article layer (6, 6') so that it becomes an older molded article layer itself or forms a composite with such a one and transfer of the molded article layer(s) from the printing plate (1) onto the layer carrier (7);
e) Possibly making the printing plate (1) available for accommodating other molded article layers (6',6") and repetition of the steps b) to d).

2. The method according to Claim 1, wherein the shaping tool (3, 3')is a template and in particular the molded article layer (6, 6') is defined by recesses (5, 5') of the shaping tool (3,3') wherein, in particular, a plastically deformable mass is applied through the recesses (5, 5') of the shaping tool (3,3') onto the printing plate (1) in order to form the molded article layer (6,6'), and in particular a paste with thixotropic properties is used as deformable mass.

3. The method according to one of Claims 1 to 2, wherein the printing plate (1) is designed in such a manner that the molded article layer (6, 6', 6") poorly adheres to it, in particular has a surface energy *less than 40 mN*/*m, in particular has a* surface energy *less* than 30 mN/m, in particular a *surface energy* less than 20 mN/m.

4. The method according to one of Claims 1 to 3, wherein the older molded article layer (6, 6') on the layer carrier (7) or the layer carrier (7) itself is provided with an adhesion promotor before a next molded article layer (6', 6") is applied on it.

5. The method according to one of Claims 1 to 4, wherein the method according to step d) also comprises the following step:
f) separation of the printing plate (1) from the cured molded article layer (6).

6. The method according to Claim 5, wherein at least one of a plurality of plastically deformable masses serves as support mass of the molded article (6, 6', 6") and can be removed again from the molded article (6, 6', 6") by mechanical, chemical or thermal methods.

7. The method according to one of Claims 1 to 6, wherein the molded article is sintered, in particular is sintered after the conclusion of the building up of the molded article.

8. The method according to one of Claims 1 to 7, wherein the curing comprises a polymerization step, in particular a polymerization step selected from the group consisting of photo-induced, thermally induced or chemically induced polymerization, wherein, in particular, a photo-induced polymerization by loading the molded article layer (6, 6', 6") with light takes place through the printing plate (1).

9. The method according to one of Claims 1 to 8, wherein the printing plate (1) is designed as a sheet and the transfer of the molded article layer(s) (6, 6', 6") from the printing plate (1) onto the layer carrier (7) comprises drawing off the sheet.

10. An apparatus (11) for carrying out a method according to one of Claims 1 to 9, comprising:
a) A layer carrier (16) for accommodating at least one molded article layer;
b) A printing plate, and
c) A shaping tool by which a molded article layer with a defined shape can be applied onto the printing plate, and
wherein the printing plate and/or the layer carrier (16) are designed in such a manner that a molded article layer applied on the printing plate can be positioned relative to the layer carrier (16) and can be transferred onto the layer carrier (16) or onto an older molded article layer already present on the layer carrier (16), and in particular the printing plate and/or the layer carrier (16) are designed in such a manner that the molded article layer can be cured in contact with the layer carrier (16)and/or in contact with an older molded article layer and can be transferred by separating the printing plate onto the layer body (16).

11. The apparatus according to Claim 10, wherein the printing plate is designed to be permeable for light waves, in particular is transparent for UV light, and preferably consists substantially of quartz glass or sapphire glass and/or the printing plate is provided with at least one adhesion-reducing surface or consists substantially of an adhesive-reducing material, and in particular the printing plate is provided with an adhesive-reducing surface selected from the group consisting of: baked-on siliconized surface, fluoropolymer coating, polysilane coating, grease-containing coating, wax-containing coating or a coating consisting of a layer of silicate.

12. The apparatus (11) according to one of Claims 10 to 11, wherein the layer carrier (16) is designed in such a manner that it has a high rigidity even under thermal stress, preferably at temperatures above 500°C, and preferably consists substantially of a material selected from the group consisting of: aluminum oxide, corundum, silicon carbide or sapphire.

13. The apparatus (11) according to one of Claims 10 to 12, comprising a plurality of shaping tools, wherein each individual shaping tool is designed in such a manner that it defines a different shape and/or wherein the shaping tool is designed in such a manner that it defines a plurality of shapes.

14. The apparatus (11) according to one of Claims 10 to 13, comprising a means for applying an adhesion promotor onto a molded article layer on the layer carrier, in particular comprising a spray apparatus for applying an adhesion promotor onto a molded article layer on the layer carrier or comprising a roller/ or a stamp pad (17) for applying an adhesion promotor onto a molded article layer on the layer carrier (16).

15. The apparatus (11) according to one of Claims 10 to 14, wherein the printing plate is designed as a sheet so that it can bend at least in a drawing-off direction, in particular wherein the printing plate is designed as a sheet and has a thickness of less than 2'000 µm, especially 10 - 2'000 µm, especially preferably 50 - 500 µm, in particular 50 - 200 µm and quite especially preferably 100 µm.

## Revendications

1. Procédé de fabrication de corps façonnés à partir de deux couches de corps façonné (6, 6', 6") ou plus, comprenant les étapes suivantes
a) fourniture d'un porte-couche (7) destiné à accueillir au moins une couche de corps façonné (6) ;
b) application d'une couche de corps façonné (6) sur une plaque d'impression (1), la couche de corps façonné (6) étant appliquée sur la plaque d'impression (1) par un outil de façonnage (3) ;
c) positionnement de la plaque d'impression (1) et/ou du porte-couche (7) ou d'une ancienne couche de corps façonné (6) relativement l'un par rapport à l'autre, notamment mise en contact de la couche de corps façonné (6, 6') avec le porte-couche (7) ou une ancienne couche de corps façonné (6) ;
d) durcissement de la couche de corps façonné (6, 6') de sorte qu'elle devienne elle-même une ancienne couche de corps façonné ou forme un composé avec celle-ci et transfert de la ou des couches de corps façonné de la plaque d'impression (1) sur le porte-couche (7) ;
e) éventuellement mise à disposition de la plaque d'impression (1) en vue d'accueillir des couches de corps façonné supplémentaires (6', 6") et répétition des étapes b) à d).

2. Procédé selon la revendication 1, l'outil de façonnage (3, 3') étant un gabarit, la couche de corps façonné (6, 6') étant notamment définie par des creux (5, 5') de l'outil de façonnage (3, 3'), une masse à déformabilité plastique étant de préférence appliquée sur la plaque d'impression (1) à travers les creux (5, 5') de l'outil de façonnage (3, 3') en vue de former la couche de corps façonné (6, 6'), la masse déformable utilisée étant notamment une pâte ayant des propriétés thixotropes.

3. Procédé selon l'une des revendications 1 et 2, la plaque d'impression (1) étant configurée de telle sorte que la couche de corps façonné (6, 6', 6") adhère difficilement sur celle-ci, possédant notamment une énergie de surface inférieure à 40 mN/m, possédant notamment une énergie de surface inférieure à 30 mN/m, possédant notamment une énergie de surface inférieure à 20 mN/m.

4. Procédé selon l'une des revendications 1 à 3, l'ancienne couche de corps façonné (6, 6') sur le porte-couche (7) ou le porte-couche (7) lui-même étant pourvu(e) d'un agent adhésif avant qu'une prochaine couche de corps façonné (6', 6") ne soit appliquée sur celle-ci ou sur celui-ci.

5. Procédé selon l'une des revendications 1 à 4, le procédé comprenant encore l'étape suivant l'étape d) de :
f) détachement de la plaque d'impression (1) de la couche de corps façonné (6) durci.

6. Procédé selon la revendication 5, au moins l'une parmi une pluralité de masses à déformabilité plastique servant de masse d'appui du corps façonné (6, 6', 6") et pouvant de nouveau être retirée hors du corps façonné (6, 6', 6") au moyen d'un procédé mécanique, chimique ou physique.

7. Procédé selon l'une des revendications 1 à 6, le corps façonné étant fritté, notamment fritté après l'achèvement de la construction du corps façonné.

8. Procédé selon l'une des revendications 1 à 7, le durcissement comprenant une étape de polymérisation, comprenant notamment une étape de polymérisation choisie dans le groupe des polymérisations photoinduite, thermo-induite et chimio-induite, une polymérisation photoinduite étant plus particulièrement effectuée en soumettant la couche de corps façonné (6, 6', 6") à de la lumière à travers la plaque d'impression (1).

9. Procédé selon l'une des revendications 1 à 8, la plaque d'impression (1) étant réalisée sous la forme d'un film et le transfert de la ou des couches de corps façonné (6, 6', 6") de la plaque d'impression (1) sur le porte-couche (7) comprenant un retrait du film.

10. Dispositif (11) pour mettre en œuvre un procédé selon l'une des revendications 1 à 9, comprenant :
a) un porte-couche (16) destiné à accueillir au moins une couche de corps façonné ;
b) une plaque d'impression, et
c) un outil de façonnage, par le biais duquel une couche de corps façonné ayant une forme définie peut être appliquée sur la plaque d'impression, et
la plaque d'impression et/ou le porte-couche (16) étant configurés de telle sorte qu'une couche de corps façonné appliquée sur la plaque d'impression est positionnable par rapport au porte-couche (16) et peut être transférée sur le porte-couche (16) ou sur une ancienne couche de corps façonné déjà présente sur le porte-couche (16), la plaque d'impression et/ou le porte-couche (16) étant notamment configurés de telle sorte que la couche de corps façonné en contact avec le porte-couche (16) et/ou une ancienne couche de corps façonné est durcissable et peut être transférée sur le corps de couche (16) en détachant la plaque d'impression.

11. Dispositif (11) selon la revendication 10, la plaque d'impression étant configurée transparente aux ondes lumineuses, notamment transparente à la lumière UV, se composant de préférence sensiblement de verre de quartz ou de verre de saphir et/ou la plaque d'impression étant pourvue d'au moins une surface réduisant l'adhérence ou se composant sensiblement d'un matériau réduisant l'adhérence, la plaque d'impression étant notamment pourvue d'une surface réduisant l'adhérence choisie dans le groupe composé de : surface siliconée par cuisson, revêtement de fluoropolymère, revêtement de polysilane, revêtement gras, revêtement cireux et revêtement constitué d'une couche de silicate.

12. Dispositif (11) selon l'une des revendications 10 et 11, le porte-couche (16) étant configuré de telle sorte qu'il présente une rigidité élevée, même sous contrainte thermique, de préférence à des températures supérieures à 500 °C, se composant de préférence sensiblement d'un matériau choisi dans le groupe composé de : oxyde d'aluminium, corindon, carbure de silicium et saphir.

13. Dispositif (11) selon l'une des revendications 10 à 12, comprenant une pluralité d'outils de façonnage, chaque outil de façonnage individuel étant configuré de telle sorte qu'il définit une autre forme et/ou l'outil de façonnage étant configuré de telle sorte qu'il définit une pluralité de formes.

14. Dispositif (11) selon l'une des revendications 10 à 13, comprenant un moyen pour appliquer un agent adhésif sur une couche de corps façonné sur le porte-couche, comprenant notamment un dispositif de pulvérisation destiné à appliquer un agent adhésif sur une couche de corps façonné sur le porte-couche ou un rouleau/ou un tampon encreur (17) destiné à appliquer un agent adhésif sur une couche de corps façonné sur le porte-couche (16).

15. Dispositif (11) selon l'une des revendications 10 à 14, la plaque d'impression étant configurée sous la forme d'un film, de sorte qu'elle peut être fléchie au moins dans une direction de retrait, la plaque d'impression étant notamment configurée sous la forme d'un film et possédant une épaisseur de moins de 2 000 µm, notamment de 10-2 000 µm, notamment de préférence de 50-500 µm, particulièrement de 50-200 µm, et tout particulièrement de préférence de 100 µm.
